Europäisches Patentamt

European Patent Office

Office européen des brevets

(11) Publication number:. . **0 395 568**
**A1**

## (12) EUROPEAN PATENT APPLICATION

(21) Application number: **90610026.8**

(22) Date of filing: **23.04.90**

(51) Int. Cl.⁵: **A01F 25/08, F26B 9/10**

(30) Priority: **24.04.89 DK 1981/89**
**06.06.89 DK 2770/89**

(43) Date of publication of application:
**31.10.90 Bulletin 90/44**

(84) Designated Contracting States:
**AT BE CH DE ES FR GB GR IT LI LU NL SE**

(71) Applicant: **Westerby, Palle**
**Hjortekrasvej 115**
**DK-2800 Lyngby(DK)**

Applicant: **Degrolard, Philippe**

**F-27130 Verneuil-sur-Avre(FR)**

(72) Inventor: **Westerby, Palle**
**Hjortekaersvej 115**
**DK-2800 Lyngby(DK)**

(74) Representative: **Larsen, Hans Ole et al**
**Larsen & Birkeholm ApS Europaeisk**
**Patentbureau P.O. Box 200**
**DK-2630 Taastrup(DK)**

(54) Apparatus for drying and moving harvested products set on a level plane.

(57) A channel to be laid out onto a floor (17) of an apparatus for drying harvested products is provided. The cross section of the channels (2) is semi-circular and the channels are provided with circumferential ribs (11) for reinforcement. Along the longitudinal edges (3, 4) of the channels (2) base pieces (15) are provided which partly close the channels (2) tightly to the floor (17) and partly on the inside of the channels (2) together with the ribs (11) in the walls of the channels (2) form upwardly open grooves (27), whose cross section decreases downwards. In the inwards sloping part (14) of each rib (11) there is an oblong vertical opening (5) which may discharge a forwards sloping and outwards directed air flow for transportation of the products. The openings (5) open into the channels (2) and due to their downwards decreasing cross section a heavy air flow is produced which will prevent clogging of the openings (5) when the material is finely grained, such as is soyseed or oilseed.

Fig.7

EP 0 395 568 A1

The invention relates to an apparatus for drying and moving harvested products set on a level plane, in particular fine grain from field crops such as soyseed or oilseed, the said apparatus comprising channels placed on the floor with openings or slits arranged in the sides near the floor, said openings or slits being designed to discharge air from the channels to the products deposited on the floor in the direction in which the products are to be moved, where the channels have two edges facing the floor, the said channels in their cross sections describing substantially a semi-circle between the said edges.

When harvesting grain from field crops, the harvested products are often so damp that they will not stand storing without being dried.

An apparatus is known from DK patent no. 119,397 of the above mentioned type where grain is deposited on a floor on which channels or pipelines are arranged being provided with holes or slits. When a drying air current is blown in through these channels, the drying air will penetrate through these holes or slits and up through the grain and dry this.

This apparatus is extremely advantageous and suited to be installed in existing farm buildings. It is simple and inexpensive and provides an excellent drying of the major part of the grain. The slits are arranged in the sides of the channels near the floor, whereby air is supplied to the heap of grain in the immediate vicinity of the floor so that all the grain is aired and dried from beneath.

With this known apparatus it is also possible after completed drying to blow the grain out from the space between the channels and thus empty the drying chamber of grain without manual shovelling, which emptying is set off by opening the discharge throttle in the wall around the drying chamber.

The channels in this known apparatus are made of a sheet material which is bent to form pipes with an edged cross section, such as a rectangular or triangular cross section or possibly cross sections having five side edges.

In one embodiment the channels are composed of an upper and a bottom part in that the upper part largely has the shape of an inverted U or V, where the edges facing downwards of the upper part are received in grooves along the side edges of the bottom part, and thus together form a pipe with a trapezoid cross section where the side walls diverge in the direction towards the floor, and the pipes are tight in the sense that air can only penetrate out to the sides through the slits since the pipes rest tightly against the floor. During transportation as well as during storing at times when the drying chamber is being used for other purposes, this embodiment permits the channels to be stacked with their upper and bottom parts apart, whereby the channels take up as little space as possible.

Unfortunately, the latter embodiment of the channels is encumbered with the disadvantage that assembly and disassembly when laying out and taking in the channels is a hard and time-consuming undertaking. The use of bottom parts also requires an extra consumption of sheet material which means that the channels are expensive to produce.

With the stack heights used in grain silos, the channels of this embodiment are also too weak to withstand the weight of the grain lying on top of the channels.

Moreover, the openings or slits in the sides of the channels are designed as gills which are difficult to produce.

Last, but not least, it has turned out that an apparatus of the type described above is unsuited for transportation of fine grain, i.e. products of very small dimensions, such as soyseed or oilseed in that these fine grains clog the openings in the sides of the channels.

Consequently, it is the object of the invention to provide such an embodiment of the apparatus that the channels can be used immediately with no need for assembly in order for them to rest tightly against the floor, to which should be added that only a low consumption of sheet material is required for the production of the channels which must be capable of withstanding the weight of grain stacked on top of the channels at a considerable height, where the openings are easy to produce, and where the openings are not clogged by the transportation of fine grain, in particular soyseed and oilseed.

This object is obtained by an apparatus of the type described in the introduction, the said apparatus according to the invention being characterized in that the walls of the channels have circumferential reinforcement ribs whose longitudinal section in the direction of transportation of the products have an outwards sloping and an inwards sloping part with an intermediary part, that the slits consist of oblong openings arranged in the inwardly sloping part of each rib in the direction of transportation of the material, that the channels at the said edges are provided with a base piece which on the inside of the channels protrudes a distance upwards in order in combination with each rib to form a channel whose upwardly open end lies higher than the top of the slits.

This embodiment enables the channels according to the invention to be laid out and taken in again after use without involving extra work in connection with assembly and disassembly, respectively, of the channels, whereby the shape with the opening facing downwards permits the channels to be stacked on top of each other so as to take up as little space as possible. To this should be added that the semi-circular shape of the channels combined with the ribs enable the channels to withstand a considerably larger vertical and downwards directed load than do the known channels. The shape of the ribs further permit the openings to be formed merely by punching holes in the side walls of the channels where the known channels have had to apply more complicated tools which could form the gills in the smooth side walls of the known channels, because these gills had to have a shape which could deflect the air in the direction of transportation provided for the material. Finally, the embodiment of the base piece, which together with each rib in the channel produces a substantially vertical pipe whose cross section narrows towards the floor, will produce an air flow out through the openings which compared to that of the known channels is heavily increased, the said heavy air flow effectively being able to blow away even fine grain from the openings so as to prevent the holes from being blocked by heaped up finely grained material.

By designing the air channel as a longitudinal groove, as described in claim 2, the highest possible air flow is obtained with no risk of causing turbulence. The air quantity and thus the capacity can hence be trebled compared to a system provided with pipes.

Finally, it is expedient, as described in claim 3, to form the base piece in such a manner that the ends of the channel fit closely to the base piece in that this renders unnecessary the cumbersome and expensive filling with cement for closure of the openings between the outside of the channel and the floor.

In the following the invention will be described in closer detail with reference to the drawing, in which

fig. 1 shows a basic element for the formation of a channel according to the invention,

fig. 2 shows the basic element after the formation of ribs in the element,

fig. 3 is an end view of the basic element shown in figs. 1 and 2 having been bent to form a channel,

fig. 4 is a top view of the channel

fig. 5 shows the shape of openings in the side of channels,

fig. 6 shows a part of the section implied by the line VI-VI in fig. 3,

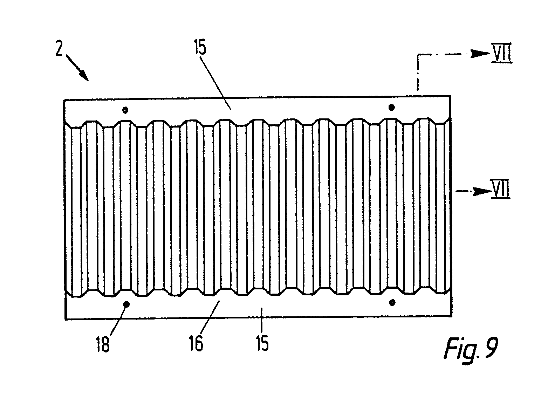

fig. 7 is a vertical section seen along VII-VII in fig. 9,

fig. 8 shows the section implied by the line VIII-VIII in fig. 7, and

fig. 9 is a top view of a channel provided with base piece.

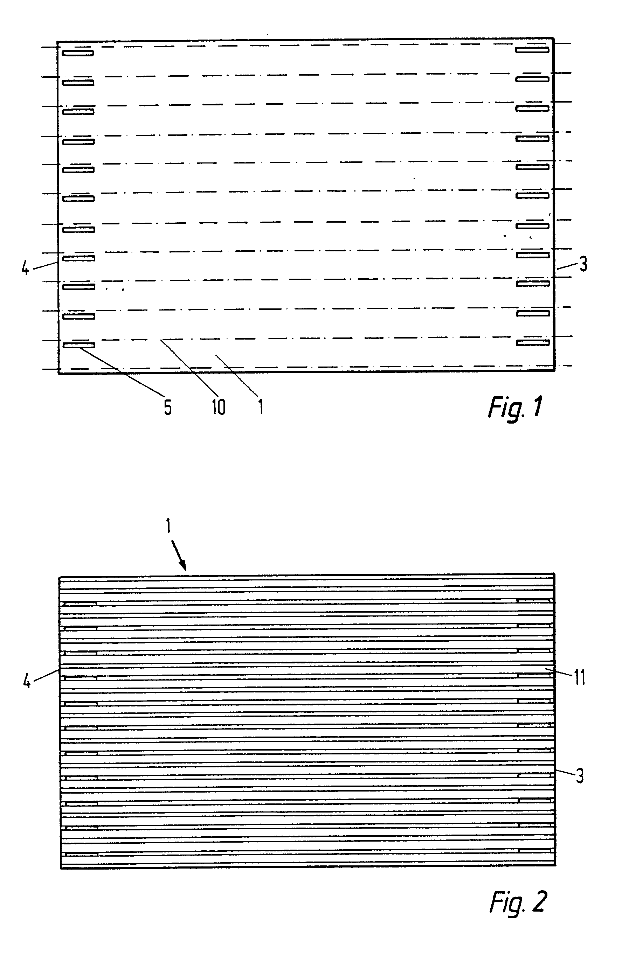

Fig. 1 shows a rectangular sheet element 1 forming a basic workpiece for the formation of a channel 2 which forms part of an apparatus for drying and moving harvested products set on a level plane, including fine grain from field crops, such as soyseed or oilseed.

The length and width of the basic element 1 may for instance be 1042 mm and 1458 mm, respectively, whereas the thickness must be adapted to the weight or height of the harvested material which is to be carried by the finished channel.

Along the two longitudinal edges 3, 4 of the element 1 a number of oblong openings 5 are punched at a short distance to the longitudinal edges, the longitudinal direction of the said oblong openings 5 standing at right angles to the longitudinal edges 3, 4.

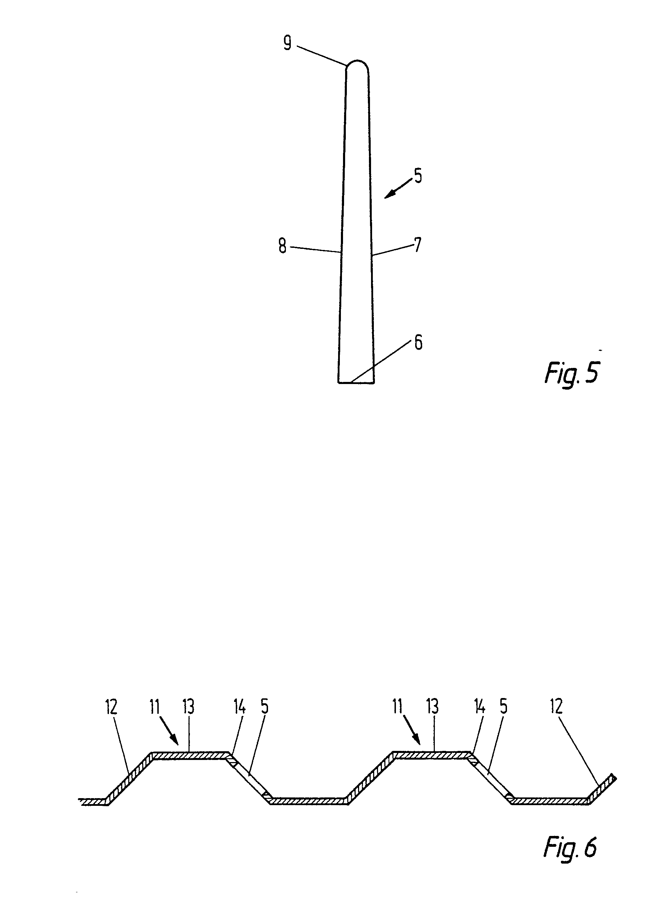

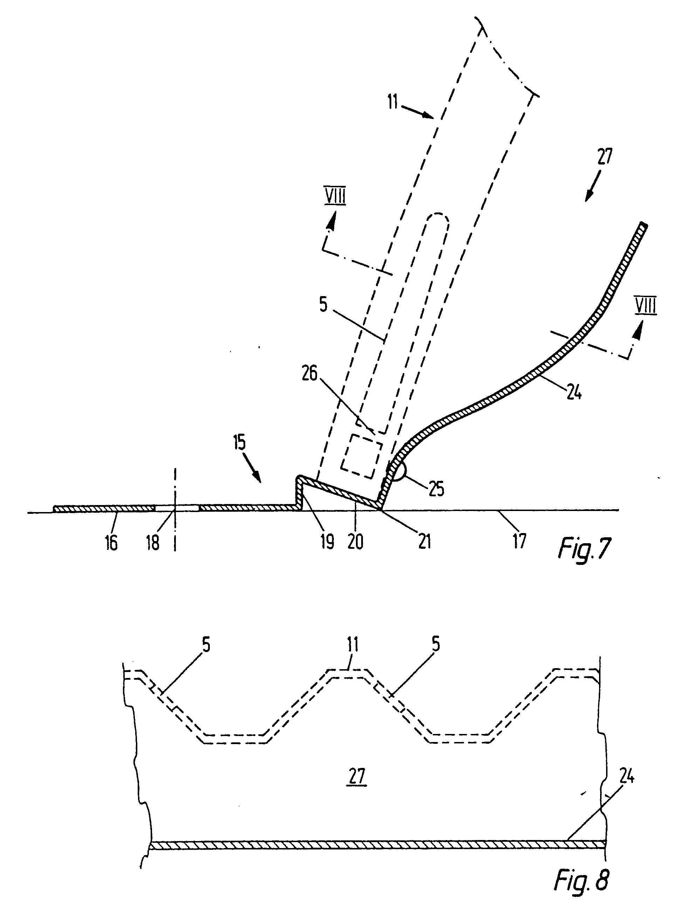

The shape of the openings 5 is shown in closer detail in figs. 5 and 7 where it is seen that the openings 5 at one end have a short straight part 6 from whose ends two long parts 7, 8 extend converging in the direction away from the short part 6 and being joined through a semi-circular curve 9 which at each side of the element 1 lies furthest away from the adjacent longitudinal edge 3, 4. As indicated in fig. 7, the openings can be divided in that unbroken intermediary parts 26 will ensure that the openings are held together.

Typically, the short part measures 12 mm and the total longest extent of the openings 5 measures 106 mm in that the curve 9 has a radius of 8 mm whereby the short parts 6 are typically positioned 15 mm from the longitudinal edges 3, 4.

Dot-and-dash lines 10 in fig. 1 indicate where the ribs 11 are provided, which in a general manner serve as reinforcement of the element 1 and of the finished channel 2, respectively, and fig. 2 shows the element 1 after the formation of the ribs 11.

An opening 5 is provided in each rib 11.

As shown in fig. 6 and seen in the presupposed direction of transportation for the harvested products, the ribs 11 are provided with an outwards sloping part 12, an inwards sloping part 14 and an intermediary part 13, and the ribs 11 are arranged in such a manner in the element 1 that the openings 5 are positioned in the centre of the inwards sloping part 14.

This positioning of the openings 5 in the ribs 11 causes an air current leaving the finished channel 2 through the openings 5 to take an outwards and upwards sloping direction away from the channel 2.

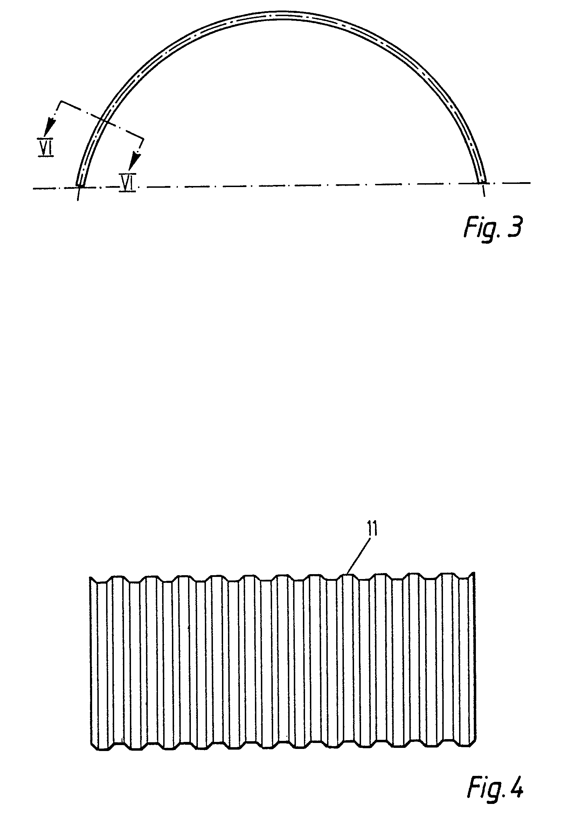

The basic element 1 is then deformed to a semi-circular shape, cf. fig. 3, where the channel 2 is seen from the end, and the dimensions are typically 1100 mm between the longitudinal edges 3, 4 and a height of 400 mm, whereby the length is reduced to 909 mm due to the deformation of the ribs 11.

Typically, the distance between two ribs 11 is 79 mm, and the ribs 11 protrude 15 mm, whereby the part 12 extends 25 mm in the longitudinal direction of the channels 2.

The angles between the intermediary part 13 of the ribs 11 and the outwards sloping part 12 and the inwards sloping part 14, respectively, may for instance be about 135..

Along each side edge 3, 4 of the channel 2 a base piece 15 shown sectionally in fig. 7 is attached.

The base piece 15 has a base 16 designed to rest on the floor 17 in the drying chamber in which the apparatus according to the invention is to be installed, and for possible attachment to the floor 17 bores 18 are provided which may for example receive a dowel or a screw not shown in the drawing.

At the edge of the base i6 facing the channel 2 the base continues in a short and substantially vertical piece 19 which in turn joins a piece 20 which from the piece 19 slopes downwards for abutment on the floor 17 along an edge which in fig. 7 is indicated by reference numeral 21. Hence, the ends 3, 4 of the channel fit closely to the base piece and hence to the floor 17.

An upwardly protruding piece 24 is attached to the edge 21 the lower part of said piece 24 extending a distance upwards for abutment on the interior parts of the channels between the ribs 11 so that these parts can be riveted 25 or spot welded to the base piece.

From here the base piece extends in a curved piece 24 forming an unbroken longitudinal groove 27. This produces perfect flow conditions for the air with a good and even admission of air to the openings 5.

The base piece 15 is preferably made of steel plate but it may also be made of a plastic material which can be injection moulded as a unit.

The piece 20 serves to close the channels 2 against the floor 17 in that due to the shape of the ribs 11 a rectangular gap between the intermediary part 13 of a rib 11 and the floor 17 will occur as will two triangular gaps between the floor 17 and the outwards sloping part 12 and the inwards sloping part 14, respectively, of a rib 11, through which gaps air would escape from the channel 2 if it were not for the part 20, whereby the effectiveness of the air flowing through the openings 5 would be considerably reduced.

In the above the channels 2 are referred to as a unit, but it will be understood that the shown channels 2 can be connected to other channels for the formation of channels of any desired length.

## Claims

1. An apparatus for drying and moving harvested products set on a level plane, in particular fine grain from field crops such as soyseed or oilseed, the said apparatus comprising channels placed on the floor with openings or slits arranged in the sides near the floor, said openings or slits being designed to discharge air from the channels to the products deposited on the floor in the direction in which the products are to be moved, where the channels have two edges facing the floor, the said channels in their cross sections describing substantially a semi-circle between the said edges, **characterized** in that the walls of the channels (2) have circumferential reinforcement ribs (11) whose longitudinal section in the direction of transportation of the products have an outwards sloping and an inwards sloping part (12 and 14, respectively) with an intermediary part (13), that the slits consist of oblong openings (5) arranged in the inwardly sloping part (14) of each rib (11) in the direction of transportation of the material, that the channels (2) at the said edges (3, 4) are provided with a base piece (15) which on the inside of the channels (2) protrudes a distance (24) upwards in order in combination with each rib (11) to form a channel (27) whose upwardly open end lies higher than the top of the slits (5).

2. Apparatus according to claim 1, **characterized** in that the upwardly protruding piece (24) of the base piece (15) is bent upwards a distance, upon which it is inwardly bent for the formation of a longitudinal groove (27) along the inside of the channel (2). (Fig. 7).

3. Apparatus according to claims 1 and 2, **characterized** in that the base piece (15) is further provided with an elevated portion (19, 20) on which the edges (3, 4) of the channel (2) can rest.

Fig. 1

Fig. 2

*Fig. 3*

*Fig. 4*

Fig. 5

Fig. 6

Fig.7

Fig.8

Fig. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | FR-A-2624690 (SEGERS) <br> * pages 1 - 2; figures 1, 2 * <br> --- | 1, 2 | A01F25/08 <br> F26B9/10 |
| X | GB-A-493993 (GRONERT) <br> * page 1, line 94 - page 3, line 33; figures 1-21 * <br> --- | 1, 3 | |
| A | DE-C-830846 (GRONERT) <br> * page 2, line 61 - page 3, line 1; figures 1-5 * <br> --- | 1 | |
| A | FR-A-1195703 (TRIPETTE) <br> ----- | | |

TECHNICAL FIELDS
SEARCHED (Int. Cl.5 )

A01F
F26B
82A

The present search report has been drawn up for all claims

| Place of search | Date of completion of the search | Examiner |
|---|---|---|
| THE HAGUE | 09 AUGUST 1990 | VERMANDER R.H. |